Europäisches Patentamt

European Patent Office

Office européen des brevets

(11) Veröffentlichungsnummer: **0 293 568**
**A1**

## (12) EUROPÄISCHE PATENTANMELDUNG

(21) Anmeldenummer: 88105014.0

(22) Anmeldetag: 28.03.88

(51) Int. Cl.⁴: **G02B 26/00 , G02B 6/36**

(30) Priorität: 31.03.87 DE 8704720 U

(43) Veröffentlichungstag der Anmeldung:
**07.12.88 Patentblatt 88/49**

(84) Benannte Vertragsstaaten:
**AT BE CH DE ES FR GB GR IT LI LU NL SE**

(71) Anmelder: **Siemens Aktiengesellschaft Berlin
und München
Wittelsbacherplatz 2
D-8000 München 2(DE)**

(72) Erfinder: **Bruch, Helmut, Dipl.-Ing.
Päwesiner Weg 33
D-1000 Berlin 20(DE)**

(54) **Schalteinrichtung für Lichtwellenleiter.**

(57) Zum Umschalten optischer Signale von einer ersten zu einer zweiten Faser sind die Lichtwellenleiter konzentrisch um eine Drehachse angeordnet. Die Lichtwellenleiter sind in zylindrischen Stiften (11, 12, 11', 12') zentriert gefaßt, wobei der Drehschalter zwei gleiche gegeneinander verdrehbare Teile besitzt, jedes dieser Teile aus mindestens drei Stiften mit einer gemeinsamen Fassung besteht und bei beiden Teilen mindestens ein Stift gegenüber den anderen Stiften um den gleichen Betrag hervorsteht. Zum Umschalten der Signale von einer ersten zu einer zweiten Faser werden die Lichtwellenleiter durch Drehung ihrer gemeinsamen Fassung um einen bestimmten Winkel aus einer ersten Position in eine zweite Position gebracht. Der genaue Betrag des Drehwinkels wird durch den Anschlag an den Mantelflächen der vorstehenden Stifte definiert.

FIG 2

EP 0 293 568 A1

## Schalteinrichtung für Lichtwellenleiter

Die Erfindung bezieht sich auf eine Schalteinrichtung für Lichtwellenleiter nach Art eines Drehschalters, bei dem die Lichtwellenleiter auf mindestens einem Kreis um die Drehachse angeordnet sich mit ihren Koppelflächen gegenüberstehen.

Eine solche Schalteinrichtung ist zum Beispiel aus der DE-OS 28 50 726 bekannt. Dort wird ein faseroptischer Relaisschalter zum Umschalten optischer Signale von einer ersten zu einer zweiten Faser beschrieben, bei welchem sich konzentrisch um eine Drehachse angeordnete Lichtwellenleiter mit ihren Koppelflächen gegenüberstehen. Die Fasern sind dabei zwischen jeweils drei zylindrischen Stiften eingeklemmt. Zum Umschalten der Signale von einer ersten zu einer zweiten Faser werden die Lichtwellenleiter durch Drehung ihrer gemeinsamen Fassung um einen bestimmten Winkel aus einer ersten Position in eine zweite Position gebracht. Der genaue Betrag des Drehwinkels wird durch eine justierbare Anschlagschraube festgelegt.

Diese Lösung erfordert eine genaue Justage der Anschlagschraube und birgt die Gefahr in sich, daß die Justage durch äußere Einflüsse, wie z.B. temperaturabhängige Längenänderung der Justierschraube verstellt werden kann.

Aufgabe vorliegender Erfindung ist es daher, eine Schalteinrichtung für Lichtwellenleiter nach Art eines Schalters zu schaffen, bei dem einerseits ein genaues Fluchten der Lichtwellenleiter gewährleistet ist und andererseits keine aufwendige Justage notwendig ist.

Zur Lösung dieser Aufgabe ist es erfindungsgemäß vorgesehen, daß die Lichtwellenleiter in zylindrischen Stiften zentriert gefaßt sind, der Drehschalter zwei gleiche gegeneinander verdrehbare Teile besitzt, jedes dieser Teile aus mindestens drei Stiften mit einer gemeinsamen Fassung besteht, bei beiden Teilen mindestens ein Stift gegenüber den anderen Stiften um den gleichen Betrag hervorsteht, daß sich die Kopplungsflächen dieser hervorstehenden Stifte auf gleichen Ebene befinden wie die Kopplungsflächen der nicht hervorstehenden Stifte des jeweiligen gegenüberliegenden Teils und daß die Mantelflächen der vorstehenden Stifte den Anschlag für die Drehbewegung definieren.

Eine mögliche Ausgestaltung besteht darin, daß Blindstifte vorgesehen sind, welche keinen Lichtwellenleiter enthalten.

Weitere Ausführungsformen sehen vor, daß für den Drehantrieb elektromagnetische Elemente mit mono- bzw. bistabilem Schaltverhalten vorgesehen sind.

Eine vorteilhafte Ausgestaltung der Erfindung besteht darin, daß die drehbar gelagerten Stifte, welche die Lichtwellenleiter enthalten, über eine elastische Kupplung mit dem elektromechanischen Antriebselement verbunden sind.

Nachfolgend werden anhand mehrerer Figuren Ausführungsbeispiele der Erfindung näher erläutert. Es zeigen:

FIG 1 in teilweise geschnittener Darstellung den Gegenstand der Erfindung

FIG 2 in teilweise geschnittener Darstellung die drehbar gegeneinander angeordneten Stifte mit den darin enthaltenen Lichtwellenleitern in einer Ausführungsform mit zwei ankommenden und vier abgehenden Signalwegen

FIG 3 das Ausführungsbeispiel gemäß FIG 2 im Schnitt A-B

FIG 4 das Ausführungsbeispiel gemäß FIG 2 im Schnitt C-D

FIG 5 eine Ausführungsform mit vier ankommenden und acht abgehenden Signalwegen

FIG 6 das in Figur 4 gezeigte Ausführungsbeispiel im Schnitt A-B.

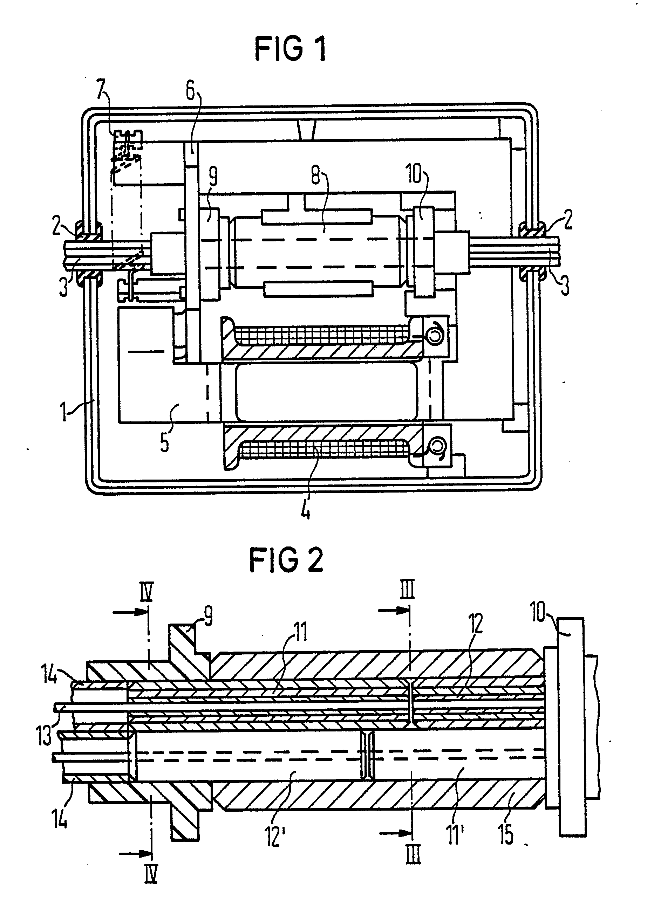

Die in FIG 1 dargestellte Umschalteinrichtung besitzt ein Gehäuse 1 mit Durchbrüchen 2 für die Lichtwellenleiter 3. Als Antriebselement für die Umschaltbewegung ist ein relaisartiger elektromagnetischer Antrieb mit einer Spule 4 und einem Joch 5 vorgesehen. Das durch die Spule 4 erzeugte Magnetfeld bewegt einen Anker 6; zur Bereitstellung der Rückstellkraft ist eine Feder 7 vorgesehen. Die Lichtwellenleiter 3 sind in nicht rungsweise gezeichneten Stiften untergebracht. Die Stifte, in FIG 2 mit 11, 11' und 12, 12' bezeichnet, sind ihrerseits durch Fassungen 9, 10 so gefaßt, daß sich zwei gegeneinander verdrehbare Stiftgruppen ergeben. Die Fassung 9 ist mit dem Anker 6 verbunden. Die Fassung 10 sitzt fest eingebettet im Gehäuse 1.

FIG 2 zeigt in teilweise geschnittener Darstellung ein Beispiel der erfindungsgemäßen Stiftanordnung. Es ist ein vorstehender Stift 11 und ein zurückgesetzter Stift 12 vorgesehen, in welchen jeweils Bohrungen zur Aufnahme von Lichtwellenleiterfasern 13 angebracht sind. Ein um die Lichtwellenleiterfaser angebrachter Mantel 14 sitzt zusammen mit dem vorstehenden Stift 11 und zwei zurückgesetzten Stiften 12' in der Fassung 9. Um die Stifte 11 bzw. 11' und 12 bzw. 12' ist eine Buchse 15 angeordnet. Die Buchse 15 sitzt gemeinsam mit den Stiften 11' und 12 in der Fassung 10. Die in Fassung 9 sitzenden Stifte 11 und 12' sind innerhalb der Buchse 15 drehbar.

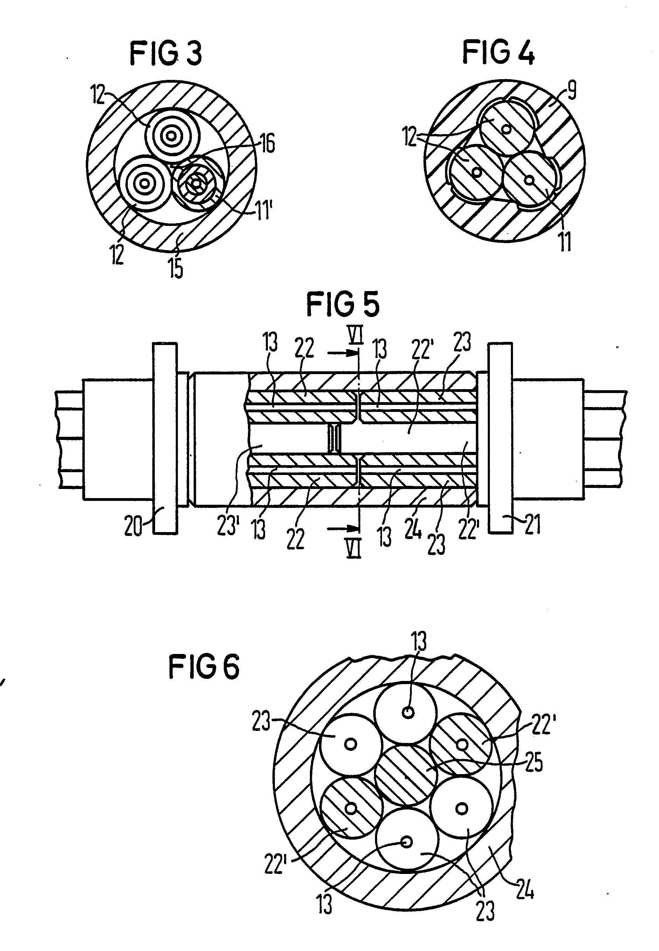

FIG 3 zeigt den Schnitt AB aus Figur 2. Man erkennt hier den vorstehenden Stift 11' und die beiden zurückgesetzten Stifte 12. Der die drei Stifte 11' bzw. 12 umgebende Hüllkreis entspricht dem Innendurchmesser von Buchse 15. Die drei Stifte 11′ und 12 sind in der Buchse 15 um eine Mittenachse 16 drehbar. Als Begrenzung für die Drehbewegung dienen die Mantelflächen der vorstehenden Stifte 11 bzw. 11′

FIG 4 zeigt die Fassung 9 mit den darin gehaltenen Stiften 11 und 12′ als Schnitt C-D. Die Fassung 9 besteht in diesem Ausführungsbeispiel aus einem gieß- oder spritzbaren Kunststoff, welcher die Mantelflächen der Stifte 11 bzw. 12′ umgibt.

FIG 5 stellt eine Ausführungsform der Erfindung mit insgesamt vier Umschaltern dar. Auch hier sitzen die Lichtwellenleiter 13 in zentrischen Bohrungen durch die Stifte 22 bzw. 23. Jeweils sechs dieser Stifte 22 bzw. 23 sind in einer Fassung 20 bzw. 21 untergebracht. Dabei ist die Fassung 20 drehbar ausgeführt, hingegen ist die Fassung 21 im Gehäuse fest angeordnet. Analog zu FIG 2 sind die von Fassung 20 gehaltenen Stifte 22 bzw. 23 drehbar in einer Buchse 24 angeordnet. Die Mantelflächen der vorstehenden Stifte 22, 22′ dienen als Begrenzung der Drehbewegung.

Der in FIG 6 dargestellte Schnitt A-B des Ausführungsbeispiels aus FIG 5 zeigt einen Mittelstift 25. Um diesen Mittelstift 25 sind die Stifte 22′ bzw. 23 kreisförmig angeordnet. Neben jedem vorstehenden Stift 22′ sind jeweils 2 nichtvorstehende Stifte 23 angeordnet.

**Ansprüche**

1. Schalteinrichtung für Lichtwellenleiter nach Art eines Drehschalters, bei dem die Lichtwellenleiter auf mindestens einem Kreis um die Drehachse angeordnet sich mit ihren Koppelflächen gegenüberstehen **dadurch gekennzeichnet,** daß die Lichtwellenleiter (13) in zylindrischen Stiften (11, 12) zentriert gefaßt sind, daß der Drehschalter zwei gleiche gegeneinander verdrehbare Teile besitzt, jedes dieser Teile aus mindestens drei Stiften (11, 12′; 11′, 12) mit einer gemeinsamen Fassung (9, 10) besteht, bei beiden Teilen mindestens ein Stift (11, 11′) gegenüber den anderen Stiften (12, 12′) um den gleichen Betrag hervorsteht, daß sich die Kopplungsflächen dieser hervorstehenden Stifte (11, 11′) auf der gleichen Ebene befinden wie die Kopplungsflächen der nicht hervorstehenden Stifte (12, 12′) des jeweiligen gegenüberliegenden Teils und daß die Mantelflächen der vorstehenden Stifte (11, 11′) den Anschlag für die Drehbewegung definieren.

2. Schalteinrichtung nach einem der vorangegangenen Ansprüche, **dadurch gekennzeichnet,** daß Blindstifte vorgesehen sind, welche keinen Lichtwellenleiter enthalten.

3. Schalteinrichtung nach einem der vorangegangenen Ansprüche, **dadurch gekennzeichnet,** daß für den Drehantrieb elektromechanische Elemente (4, 5, 6) mit mono- bzw. bistabiler Schaltcharakteristik vorgesehen sind.

4. Schalteinrichtung nach einem der vorangegangenen Ansprüche, **dadurch gekennzeichnet,** daß die drehbar gelagerten Stifte (11, 12′), welche die Lichtwellenleiter (13) enthalten, über eine elastische Kupplung (9) mit dem elektromechanischen Antriebselement (4, 5, 6) verbunden sind.

# FIG 1

# FIG 2

# FIG 3

# FIG 4

# FIG 5

# FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 9, Nr. 122 (P-359)[1845] 28. Mai 1985; & JP - A - 60 7415 (SUMITOMO DENKI KOGYO K.K.) 16.01.1985 * Zusammenfassung; Abbildungen * --- | 1 | G 02 B 26/00 G 02 B 6/36 |
| A | PATENT ABSTRACTS OF JAPAN, Band 9, Nr. 50 (P-339)[1773] 5. März 1985; & JP - A - 59 189 302 (MATSUSHITA DENKI SANGYO K.K.) 26.10.1984 * Zusammenfassung; Abbildungen * --- | 2 | |
| D,A | DE-A-2 850 726 (TRW INC.) ----- | | |

| | |
|---|---|
| | RECHERCHIERTE SACHGEBIETE (Int. Cl.4) |
| | G 02 B 26/02 G 02 B 6/00 |

Der vorliegende Recherchenbericht wurde für alle Patentansprüche erstellt

| Recherchenort | Abschlußdatum der Recherche | Prüfer |
|---|---|---|
| BERLIN | 01-06-1988 | KEMSLEY E.E.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)